# EUROPÄISCHE PATENTSCHRIFT

(11) **EP 2 539 586 B1**
(45) Veröffentlichungstag und Bekanntmachung des Hinweises auf die Patenterteilung: **30.03.2016**
(21) Anmeldenummer: 11702787.0
(22) Anmeldetag: 25.01.2011
(51) Int. Cl.: F03D 7/02

(54) **VERFAHREN ZUM BETRIEB EINER WINDENERGIEANLAGE**
METHOD FOR OPERATING A WIND ENERGY INSTALLATION
PROCÉDÉ POUR FAIRE FONCTIONNER UNE INSTALLATION ÉOLIENNE

(30) Priorität: 22.02.2010 DE 102010002203
(43) Veröffentlichungstag der Anmeldung: 02.01.2013
(73) Patentinhaber: Senvion GmbH, 22297 Hamburg (DE)
(72) Erfinder: VON MUTIUS, Martin, 24358 Ascheffel (DE)
(74) Vertreter: Seemann, Ralph
(86) Internationale Anmeldenummer: PCT/EP2011/000292
(87) Internationale Veröffentlichungsnummer: WO 2011/101079

(56) Entgegenhaltungen:
- WO-A2-2009/043352
- US-A1- 2008 152 493
- US-B1- 6 890 152

## Beschreibung

Die Erfindung betrifft ein Verfahren zum Betreiben einer Windenergieanlage mit einem Rotor und wenigstens einem in seinem Anstellwinkel verstellbaren Rotorblatt. Die Erfindung betrifft weiter eine Windenergieanlage mit einem Rotor und wenigstens einem in seinem Anstellwinkel verstellbaren Rotorblatt und einer Betriebssteuervorrichtung. Ferner betrifft die Erfindung die Verwendung eines erfindungsgemäßen Verfahrens bei einer erfindungsgemäßen Windenergieanlage.

Neben thermischen und chemischen Methoden können mechanische Methoden zum Enteisen der Rotorblätter großer Windenergieanlagen eingesetzt werden.

Aus der Patentschrift US 6,890,152 B1 ist ein Verfahren zum Enteisen eines Rotorblattes einer Windenergieanlage bekannt, wobei eine Oberfläche des Rotorblattes durch schwingungsanregende Elemente, insbesondere Lautsprecher oder Schalltrichter, in Vibrationen versetzt wird, deren Frequenzen insbesondere im niedrigen akustischen Frequenzbereich liegen.

Aus der internationalen Anmeldung WO 2009/043352 A2 ist ein Verfahren zum Enteisen eines Rotorblattes einer Windenergieanlage bekannt, wobei an einem Rotorblatt anhaftendes Eis bei einer stillstehenden Windenergieanlage durch abruptes Beschleunigen und Abbremsen der Gondel, des Rotors oder des Rotorblattes abgeschüttelt wird.

Aufgabe der vorliegenden Erfindung ist es, ein effizientes Verfahren zum Enteisen eines Rotorblatts einer Windenergieanlage und eine entsprechende Windenergieanlage anzugeben.

Die Aufgabe wird gelöst durch ein Verfahren zum Betreiben einer Windenergieanlage mit einem Rotor und wenigstens einem in seinem Anstellwinkel verstellbaren Rotorblatt, das dadurch weitergebildet ist, dass das Rotorblatt durch wenigstens fünf wiederholte, insbesondere periodische, Verstellvorgänge des Anstellwinkels um seine Längsachse beschleunigt wird, wobei eine Rotorblattbiegeschwingung mit einer Schwingungsamplitude und einer Schwingungsfrequenz angeregt wird, wobei die Verstellvorgänge derart zeitlich aufeinander erfolgen, dass ein Zeitraum zwischen zwei aufeinanderfolgenden Verstellvorgängen in gleicher Richtung einem Vielfachen der inversen Schwingungseigenfrequenz entspricht oder um weniger als 10 % länger oder kürzer ist. Hierdurch werden zum Enteisen aufwändige Zusatzsysteme und hohe und/oder unkontrollierte strukturelle Zusatzbelastungen ebenso vermieden wie die Notwendigkeit eines kompletten Stillstandes der Windenergieanlage vor und/oder nach dem Enteisen.

Die Erfindung beruht insbesondere auf dem Gedanken, durch gezielt angeregte Schwingungen des Rotorblattes dessen Oberfläche elastisch zu deformieren, wodurch anhaftendes Eis zerbrochen und/oder abgelöst wird und abfällt. Schwingungen mit höherer Amplitude bedingen dabei stärkere Deformationen, was wiederum die Effizienz des Enteisens positiv beeinflusst. Hierbei wird insbesondere eine Schwenkschwingung erzeugt, wodurch insbesondere ausreichend große Deformationen an der Blattnase erzielt werden, die zu einer Eisablösung führen. Bei einer Schwenkschwingung handelt es sich um eine Rotorblattbiegeschwingung, die bei einer Betriebsstellung des Rotorblatts im Teillastbereich bzw. Finepitch im Wesentlichen in der Rotorebene liegt. Die erste Biegeeigenfrequenz eines Rotorblatts ist üblicherweise in Schlagrichtung. Hierzu ist die Schwenkschwingung im Wesentlichen orthogonal. Die Schwenkschwingung ist somit insbesondere eine Schwingung von der Hinterkante des Rotorblatts zur Nase des Rotorblatts.

Die Rotorblätter moderner Windenergieanlagen können in ihrem Anstellwinkel verstellt werden. Dazu ist für jedes Rotorblatt eine Verstellvorrichtung zur Drehung um die Längsachse vorgesehen. Bei jeder Änderung der Verstellrate, insbesondere beim Anfahren oder Stoppen der Verstellvorrichtung, wirken Beschleunigungskräfte auf das Rotorblatt, wodurch dieses aufgrund seiner Massenträgheit zwangsläufig in Schwingungen versetzt wird. Erfindungsgemäß wird das Rotorblatt um seine Längsachse beschleunigt, indem durch wenigstens fünf aufeinanderfolgende, insbesondere periodische, Verstellvorgänge wiederholt Beschleunigungskräfte auf das Rotorblatt ausgeübt werden. Unter Anstellwinkel ist im Rahmen der Erfindung insbesondere eine Winkelposition des Rotorblatts um seine Längsachse gemeint. Die Verstellung um die Blattlängsachse kann dabei sowohl mittels im Stand der Technik hinreichend bekannten hydraulischen, als auch elektrischen Verstellsystemen erfolgen.

Die resultierende komplexe Bewegung der Oberfläche des Rötorblatts kann als Überlagerung verschiedener Schwingungen aufgefasst werden.

Durch die komplexe Blattgeometrie, insbesondere die Krümmung und Verwindung der Blattachse, sind Schlagschwingung, Schwenkschwingung und Torsionsschwingung miteinander gekoppelt. Vorzugsweise wird insbesondere die 1. Eigenfrequenz der Schwenkschwingung angeregt.

Sowohl Verstellvorgänge, die alle in dieselbe Richtung oder in abwechselnd entgegengesetzter Richtung erfolgen, regen eine Rotorblattbiegeschwingung, insbesondere Schwenkschwingung, an. Unter Beschleunigung des Blatts bei jedem Verstellvorgang wird im Rahmen der Erfindung insbesondere verstanden, dass die Beschleunigungskräfte bei jedem Verstellvorgang wenigstens eine Teilkomponente in Richtung der Rotorblattbiegebewegung des schwingenden Rotorblattes aufweisen. Dadurch erhöht sich bei jedem Verstellvorgang die Schwingungsamplitude der Rotorblattbiegeschwingung. Erfindungsgemäß werden wenigstens fünf aufeinanderfolgende Verstellvorgänge ausgeführt. Dadurch wird gewährleistet, dass eine für die effiziente Enteisung ausreichend hohe Schwingungsamplitude erreicht wird.

Die Rotorblattbiegeschwingung wird durch Reibung gedämpft, so dass die Schwingungsamplitude nach dem letzten Verstellvorgang aus einer Serie von Verstellvorgängen kontinuierlich abnimmt. Bei einer bevorzugten Ausführung der Erfindung erfolgen daher wenigstens acht aufeinanderfolgende Verstellvorgänge, so dass die gewünschte Höhe der Schwingungsamplitude nicht nur erreicht, sondern auch für einen längeren Zeitraum erhalten wird.

Erfindungsgemäß erfolgen die Verstellvorgänge derart zeitlich aufeinander, dass ein Zeitraum zwischen zwei aufeinanderfolgenden Verstellvorgängen in gleicher Richtung einem Vielfachen oder im Wesentlichen einem Vielfachen der inversen Schwingungsfrequenz entspricht oder um weniger als 10 % länger oder kürzer ist. Es kann auch ein Zeitraum zwischen zwei aufeinanderfolgenden Verstellvorgängen in entgegengesetzter Richtung vorgesehen sein, der vorzugsweise einem ganzzahligen Vielfachen oder im Wesentlichen einem ganzzahlingen Vielfachen der Hälfte der inversen Schwingungsfrequenz entspricht oder um weniger als 10 % länger oder kürzer ist.

Bei einer besonders bevorzugten Ausführung der Erfindung werden strukturelle Belastungen und Verschleißerscheinungen verhindert bzw. gering gehalten, indem die Verstellvorgänge mit einer Verstellrate von weniger als 8 °/s, insbesondere weniger als 4 °/s, ausge-führt werden.

Vorzugsweise ist die Rotorblattbiegeschwingung eine Schwenkschwingung, insbesondere eine Schwenkschwingung mit einer Frequenz, die der ersten Eigenschwenkschwingungsfrequenz entspricht.

In einer bevorzugten Ausführungsform der Erfindung erfolgen die Verstellvorgänge derart zeitlich aufeinander, dass ein Zeitraum zwischen zwei aufeinander folgenden Verstellvorgängen in gleicher Richtung um nicht mehr als +10% oder -10% von der inversen ersten Schwenkeigenfrequenz des Rotorblatts abweicht. Der Zeitraum beträgt damit insbesondere zwischen 90% und 110% der inversen ersten Schwenkeigenfrequenz.

Auch bei optimal abgestimmten Verstellvorgängen ist die erreichbare Schwingungsamplitude nicht beliebig hoch, sondern wird vielmehr durch ein dämpfungsbedingtes Maximum begrenzt, welches unter anderem von der Schwingungsfrequenz abhängig ist. Ein besonders hohes Maximum für die Schwingungsamplitude wird erreicht, wenn die Schwingungsfrequenz einem Wert nahe an einer Resonanzfrequenz des Rotorblattes entspricht. Besonders vorteilhaft ist eine Ausführung der Erfindung, bei der gezielt die erste oder niedrigste Resonanzfrequenz der Schwenkschwingung angeregt wird, da so effizient ein Maximum der Schwingungsamplitude erzielt wird. Vorzugsweise beträgt die Schwingungsfrequenz weniger als 1,8 Hz.

Ein Rotorblatt mit anhaftendem Eis weist eine andere Massenverteilung auf als ein nicht vereistes Rotorblatt gleicher Bauart. Dadurch werden die Resonanzfrequenzen des Rotorblattes gegenüber dem nicht vereisten Zustand verschoben. Darüber hinaus werden die Resonanzfrequenzen während des Enteisens durch Eisabwurf ständig verändert. Bei einer besonders vorteilhaften Ausführung der Erfindung werden die Verstellvorgänge unter Einbeziehung eines Sensorsystems ausgeführt, gesteuert und/oder geregelt und insbesondere dadurch zeitlich synchronisiert. Besonders vorteilhaft ist dabei das Einbeziehen eines Sensorsystems, bei dem die Bewegung des schwingenden Rotorblattes durch Überwachung geeigneter Messgrößen erfasst, gemessen und/oder überwacht wird. Vorzugsweise werden die Verstellvorgänge auf die sich ändernde Resonanzfrequenz, insbesondere die erste Schwenkeigenfrequenz, angepasst.

Bei einer bevorzugten Ausführung der Erfindung erfasst, misst und/oder überwacht das Sensorsystem einen elektrischen Strom, der zum Betrieb der Verstellvorrichtung des Rotorblattanstellwinkels bzw. Anstellwinkels verwendet wird. Hierbei wird berücksichtigt, dass die Leistungsaufnahme der Verstellvorrichtung bei einem Verstellvorgang gegen die Schwingungsbewegung des Rotorblattes höher ist als bei einem Verstellvorgang mit der Schwingungsbewegung des Rotorblattes. Daher folgt der Verlauf eines elektrischen Stroms, der zum Betrieb der Verstellvorrichtung dient, der Schwingungsbewegung des Rotorblattes und somit insbesondere der Schwenkschwingung. Hierbei wird vorzugsweise der Strom dazu genutzt, die Verstellvorgänge zu steuern. Vorteilhafterweise werden oftmals schon vorhandene Sensoren zur Steuerung der Verstellvorrichtung verwendet.

Bei einer bevorzugten Ausführung der Erfindung erfasst, misst und/oder überwacht das Sensorsystem wenigstens einen Belastungs-, Dehnungs- und/oder Beschleunigungswert an der Windenergieanlage, insbesondere an dem Rotorblatt. Hierdurch können die Schwingungsfrequenz und die Schwingungsamplitude der Rotorblattbiegeschwingung, insbesondere Schwenkschwingung, direkt bestimmt werden. Beispielsweise ist dies möglich durch Messung der Belastung der Rotorblattaufhängung an der Nabe, der Dehnung der Rotorblattoberfläche oder der Beschleunigung des Rotorblattes.

Ebenfalls besonders bevorzugt ist eine Ausführung der Erfindung bei der eine Rotordrehung mit einer Rotordrehfrequenz unterhalb eines Fünftels, insbesondere unterhalb eines Zehntels, insbesondere unterhalb eines Fünfzehntels, der Schwingungsfrequenz der Rotorblattbiegeschwingung, insbesondere Schwenkschwingung, vorliegt, wobei das Rotorblatt einen Umlauf mit einem oberen und einem unteren Halbkreis beschreibt, sowie pro Umlauf eine Aufwärtsbewegung und eine Abwärtsbewegung ausführt. Dadurch wird gewährleistet, dass die wenigstens fünf Verstellvorgänge innerhalb eines Rotorumlaufs erfolgen.

Insbesondere vorteilhaft ist eine weitere Ausführung der Erfindung, bei der die Rotordrehfrequenz im unteren Frequenzbereich für einen netzgekoppelten Betrieb der Windenergieanlage liegt. Dadurch entfallen lange Übergangsphasen zum Abbremsen oder Anfahren der Windenergieanlage, so dass direkt vor und nach dem Enteisungsvorgang Strom produziert oder die Stromproduktion sogar während des Enteisungsvorgangs fortgesetzt werden kann.

Die Rotorblattbiegeschwingung bzw. insbesondere Schwenkschwingung des Rotorblattes wird bei drehendem Rotor stärker gedämpft, weil eine aerodynamische Komponente der Schwingungsdämpfung hinzukommt. Dennoch ist es vorteilhaft, die Schwingungsamplitude der Rotorblattbiegeschwingung, insbesondere Schwenkschwingung, gegebenenfalls zusätzlich zu dämpfen, um hohe oder unkontrollierbare Belastungen der Windenergieanlage zu vermeiden.

Vorzugsweise wird die Schwingungsamplitude wenigstens in einem Abschnitt des Umlaufs des Rotorblatts durch einen oder mehrere schwingungsdämpfende Verstellvorgänge verringert. Eine zusätzliche Dämpfung wird durch Verstellvorgänge des Rotorblattanstellwinkels erreicht, die gezielt gegen die momentane Schwingungsbewegung des Rotorblattes an der Blattnabe gerichtet sind. Verstellrate, Dauer und Anzahl derartiger Verstellvorgänge werden dabei vom gewünschten Grad der Dämpfung bestimmt.

Vorzugsweise sind die Verstellvorgänge mit der Rotordrehung synchronisiert. Insbesondere ist es vorteilhaft, wenn schwingungsanregende Verstellvorgänge lediglich während der Abwärtsbewegung oder im unteren Halbkreis des Umlaufs des Rotorblatts und/oder schwingungsdämpfende Verstellvorgänge lediglich während der Aufwärtsbewegung und/oder im oberen Halbkreis des Umlaufs des Rotorblatts ausgeführt werden. Dadurch wird erreicht, dass eine nennenswerte Schwingungsamplitude der Rotorblattbiegeschwingung, insbesondere Schwenkschwingung, nur im unteren Halbkreis des Rotorblattumlaufs vorliegt. Dadurch wird verhindert, dass Eis im oberen Halbkreis des Umlaufs gelöst wird und die Windenergieanlage durch herabfallendes Eis getroffen und/oder beschädigt wird.

Bei einer besonders vorteilhaften Ausführung der Erfindung erfolgen die schwingungsanregenden Verstellvorgänge lediglich im unteren Halbkreis des Rotorblattumlaufs. Gegebenenfalls ist es auch vorteilhaft, erste Verstellvorgänge bereits in der Abwärtsbewegung des Rotorblattes vor Erreichen des unteren Halbkreises des Rotorblattumlaufs auszuführen, um bereits zu Beginn des unteren Halbumlaufs eine Schwingungsamplitude von erwünschter Höhe zu erreichen.

Ebenfalls besonders bevorzugt ist eine Ausführung der Erfindung, bei der die Schwingungsamplitude im oberen Halbkreis des Umlaufs gezielt gedämpft wird, so dass kein Eis im oberen Halbkreis des Umlaufs gelöst wird, so dass darunter liegende Teile der Windenergieanlage nicht beschädigt werden. Gegebenenfalls ist es vorteilhaft, die gezielte Dämpfung bereits in der Aufwärtsbewegung des Rotorblattes vor Erreichen des oberen Halbkreises des Umlaufs zu beginnen.

Darüber hinaus ist es vorteilhaft, ein zusätzliches Enteisungsverfahren, etwa ein thermisches oder ein chemisches Enteisungsverfahren, anzuwenden. Die Kombination mit dem erfindungsgemäßen Verfahren ermöglicht insbesondere, ein thermisches Enteisungssystem mit geringerer Leistung und somit geringeren Kosten einzusetzen.

Die Aufgabe wird ferner gelöst durch eine Windenergieanlage mit einem Rotor, wenigstens einem verstellbaren Rotorblatt und einer Betriebssteuervorrichtung, wobei die Betriebssteuervorrichtung für die Anwendung eines erfindungsgemäßen Verfahrens ausgebildet ist.

Die Aufgabe wird außerdem gelöst durch die Verwendung eines erfindungsgemäßen Verfahrens zum Betreiben einer erfindungsgemäßen Windenergieanlage.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen
- Fig. 1: eine schematische Darstellung einer Windenergieanlage mit einem Rotor und einem verstellbaren Rotorblatt, das einen Umlauf mit einer oberen und einer unteren Hälfte beschreibt,
- Fig. 2: ein schematisches Blockdiagramm für ein Ausführungsbeispiel einer erfindungsgemäßen Windenergieanlage,
- Fig. 3: schematische Diagramme zur Veranschaulichung der Erfindung anhand eines Ausführungsbeispiels,
- Fig. 4: schematische Diagramme zur Veranschaulichung der Erfindung anhand eines weiteren Ausführungsbeispiels.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

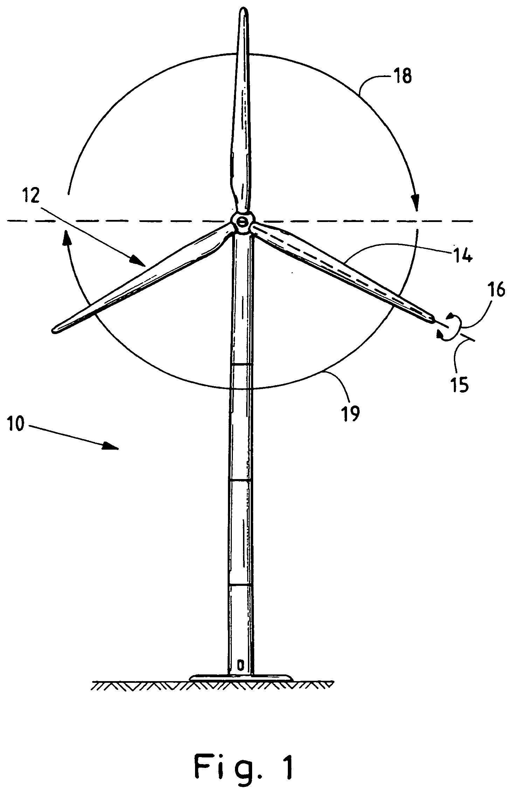

Fig. 1 zeigt schematisch eine beispielhafte Windenergieanlage 10 mit einem Rotor 12 und einem Rotorblatt 14 sowie zwei weitere Rotorblätter, wobei beispielsweise das Rotorblatt 14 um seine Längsachse 15 entlang der Verstellrichtung 16 verstellt werden kann. Bei drehendem Rotor 12 beschreibt das Rotorblatt 14 einen Umlauf mit einer oberen Hälfte 18 und einer unteren Hälfte 19.

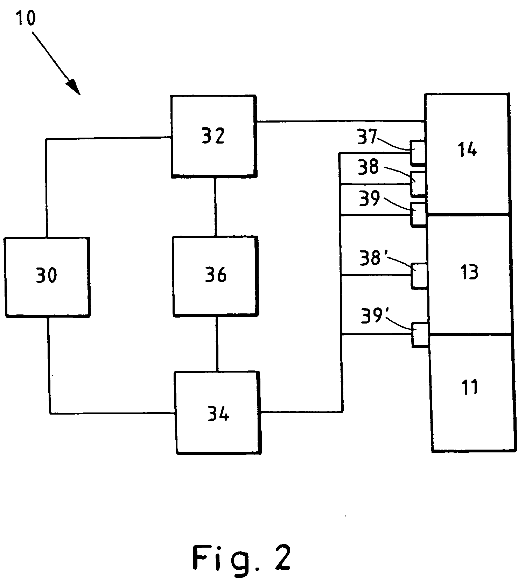

Fig. 2 zeigt ein schematisches Blockdiagramm einer erfindungsgemäßen Windenergieanlage 10. Ein Rotorblatt 14 eines Rotors ist schematisch mit einer Rotornabe 13 und einem Triebstrang 11 verbunden. Das Rotorblatt 14 wird mittels der Verstellvorrichtung 32 um seine Längsachse 15 in der Verstellrichtung 16 verstellt. Die Verstellvorrichtung 32 wird betrieben mit einem elektrischen Strom 36 und gesteuert durch eine Betriebssteuervorrichtung 30. Dabei verwendet die Betriebssteuervorrichtung 30 ein Sensorsystem 34, welches den elektrischen Strom 36 überwacht. Des Weiteren überwacht das Sensorsystem einen Dehnungswert 37 am Rotorblatt 14, einen Beschleunigungswert 38 am Rotorblatt 14, einen Belastungswert 39 an der Verbindung des Rotorblatts 14 mit der Rotornabe 13, einen Beschleunigungswert 38' an der Rotornabe 13 und einen Belastungswert 39' an der Verbindung zwischen der Rotornabe 13 und dem Triebstrang 11.

Die in Fig. 2 gezeigten Dehnungs- , Beschleunigungs- und Belastungswerte 37, 38, 38', 39 und 39' sowie der elektrische Strom 36 dienen ausdrücklich nur als Beispiele für mögliche vom Sensorsystem 34 gemessene, erfasste und/oder überwachte Werte. Es müssen nicht alle dieser Werte gemessen, erfasst und/oder überwacht werden. Es können auch andere Werte gemessen, erfasst und/oder überwacht werden.

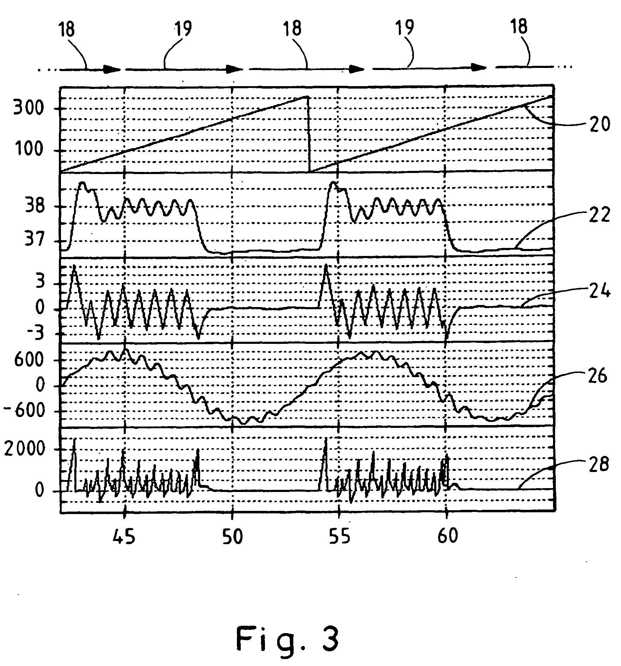

Fig. 3 zeigt einige schematische Diagramme zu einem Ausführungsbeispiel der Erfindung. Die fünf in Fig. 3 gezeigten Diagramme stellen von oben nach unten dar:
1. den zeitlichen Verlauf 20 der Rotorblattposition in °, wobei 0° einer Stellung lotrecht nach oben entspricht,
2. den zeitlichen Verlauf 22 des Anstellwinkels in °,
3. den zeitlichen Verlauf 24 der Verstellrate in °/sek,
4. den zeitlichen Verlauf 26 des Biegemoments an der Blattwurzel in kNm und
5. den zeitlichen Verlauf 28 der Leistungsaufnahme der Verstellvorrichtung 32.

In diesem Beispiel liegt eine Drehung des Rotors 12 mit etwa 0,08 Hz vor. Dadurch beschreibt das Rotorblatt 14 einen Umlauf, so dass die Position des Rotorblattes 14 dem zeitlichen Verlauf 20 folgt. Dabei befindet sich das Rotorblatt 14 abwechselnd in der oberen Hälfte 18 oder der unteren Hälfte 19 des Umlaufs, wie durch die Pfeile oberhalb der Diagramme dargestellt ist.

Beginnend mit der Abwärtsbewegung des Rotorblattes 14, d.h. in der Mitte der oberen Hälfte 18 des Umlaufs, wird die Verstellvorrichtung 32 aktiviert, wodurch das Rotorblatt 14 um seine Längsachse 15 entlang der Verstellrichtung 16 beschleunigt wird. Der zeitliche Verlauf 24 der Verstellrate ist ebenfalls gezeigt. Durch die Verstellvorgänge wird eine Rotorblattbiegeschwingung, insbesondere Schwenkschwingung, des Rotorblattes 14 angeregt. Im Folgenden wird die Schwenkschwingung näher betrachtet.

Es erfolgen jeweils acht Verstellvorgänge mit positiver und negativer Verstellrate, wodurch der Anstellwinkel, dessen zeitlicher Verlauf 22 dargestellt ist, periodisch variiert wird. Während der Aufwärtsbewegung des Rotorblatts 14, d.h. von der Mitte der unteren Hälfte 19 des Umlaufs bis zum Erreichen der Mitte der oberen Hälfte 18 des Umlaufs, erfolgen keine Verstellvorgänge.

Außerdem ist der zeitliche Verlauf 26 des Biegemomentes an der Blattwurzel, d.h. an der Verbindung zwischen Rotorblatt 14 und Rotor 12, gezeigt. Zu erkennen sind zwei überlagerte Komponenten. Die Erste geht zurück auf die Belastung des Rotorblattes 14 unter seinem Eigengewicht und ist korreliert mit dem zeitlichen Verlauf 20 der Position des Rotorblattes 14. Die Zweite geht zurück auf die Schwenkschwingung des Rotorblattes 14 und oszilliert mit einer entsprechenden Schwingungsfrequenz.

Es ist deutlich zu erkennen, dass im dargestellten Fall im Bereich der Blattwurzel die Schwenkschwingung wesentlich geringere Biegemomente verursacht als das Eigengewicht des Rotorblatts 14. Soll im Bereich der Blattwurzel vorhandenes Eis gelöst werden, ist die Schwingungsamplitude möglicherweise zu erhöhen. Im besonders interessanten äußeren Blattbereich fällt die Zusatzbelastung durch die Schwenkschwingung deutlich größer aus, so dass dort Eis gelöst wird.

Ein Vergleich zwischen dem zeitlichen Verlauf 24 der Verstellrate und dem zeitlichen Verlauf 26 des Biegemoments zeigen, dass in diesem Beispiel die Verstellvorgänge periodisch mit einer Frequenz erfolgen, die im Wesentlichen der Oszillationsfrequenz des Biegemomentes entspricht.

Außerdem ist zu erkennen, dass die Komponente des Biegemomentes, die auf die Schwenkschwingung zurückzuführen ist, lediglich während des unteren Umlaufs 19 und nicht im oberen Umlauf 18 vorliegt, weil ab der Mitte der unteren Hälfte 19 des Umlaufs keine Verstellvorgänge erfolgen und die Schwenkschwingung bis zum Erreichen der oberen Hälfte 19 des Umlaufs ausklingt. Die Anregung der Schwenkschwingung des Rotorblatts ist besonders effizient, weil so die Blattnase, die in besonderem Maße zur Vereisung neigt, die größte Zusatzbelastung und somit auch die größte zusätzliche Dehnung erfährt. Da Eis sich nicht stark dehnen lässt, kann es so sehr effektiv von der Blattoberfläche gelöst werden.

Als letztes Diagramm ist der zeitliche Verlauf 28 der Leistungsaufnahme durch die Verstellvorrichtung 32 gezeigt. Aus dem Vergleich mit dem zeitlichen Verlauf 26 des Biegemoments ist eine Korrelation mit der Schwenkschwingung des Rotorblattes 14 zu erkennen.

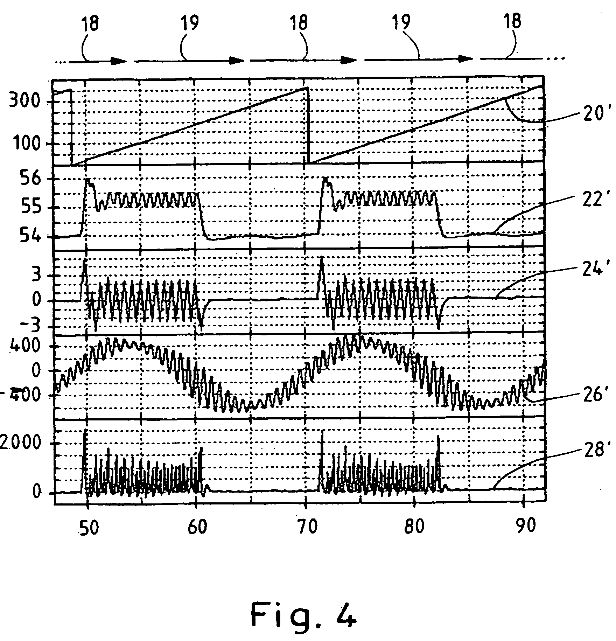

Fig. 4 zeigt ein vergleichbares Diagramm der entsprechenden Kurven für ein weiteres Ausführungsbeispiel der Erfindung. In diesem Beispiel liegt eine langsamere Rotordrehung mit einer Frequenz von etwa 0,04 Hz vor. Aufgrund der langsameren Drehung des Rotors 12 können während der Abwärtsbewegung des Rotorblatts 14 jeweils 15 Verstellvorgänge mit positiver und negativer Verstellrate erfolgen, wobei dieselbe Schwingungsfrequenz der Schwenkschwingung wie im vorangegangenen Beispiel angeregt wird.

Aus dem zeitlichen Verlauf 26' geht hervor, dass wesentlich höhere Schwingungsamplituden der Schwenkschwingung erreicht werden als in dem Ausführungsbeispiel aus Fig. 3. Obwohl wie dort während der Aufwärtsbewegung des Rotorblatts 14 keine Verstellvorgänge erfolgen, liegt auch während der oberen Hälfte 18 des Umlaufs des Rotorblatts 14 eine Schwenkschwingung mit beträchtlicher Schwingungsamplitude vor. In solch einem Fall ist es vorteilhaft, die Schwenkschwingung vor Erreichen der oberen Hälfte 18 des Umlaufs des Rotorblatts 14 durch Verstellvorgänge zu dämpfen, die gegen die Bewegung des schwingenden Rotorblattes 14 gerichtet sind.

Im Betrieb der Windenergieanlage, d.h. bei rotierendem Rotor, kann für die Enteisung präventiv, also ohne ein Erkennen der Vereisung, oder alternativ mit einer Sensorik die Vereisung erkannt werden. Dann kann eine Leistungs- und/oder Drehzahlreduzierung der Windenergieanlage stattfinden. Anschließend wird das Betriebsführungssystem bzw. die Steuervorrichtung des Betriebsführungssystems auf einen Enteisungsmode umgeschaltet, da einige Statuscodes und Überwachungen deaktiviert werden sollten. Daraufhin wird wiederholt das Rotorblatt bzw. die Rotorblätter in eine gewünschte Rotorblattbiegeschwingung, insbesondere Schwenkschwingung angeregt. Optional kann danach der Verstellvorgang des Rotorblattanstellwinkels auf der oberen Rotorhälfte ausgesetzt werden und möglicherweise der Rotorblattanstellwinkel auf einen Mittelwert der Blattanstellwinkel der anderen Rotorblätter zurückgeführt werden. Als weiteren optionalen Schritt kann sich ein Erkennungsschritt einer möglicherweise erfolgreichen Enteisung des Blattes anschließen. Hieran schließen sich entsprechende Enteisungsverfahrensschritte für die weiteren Rotorblätter sukzessive an. Danach wird die Windenergieanlage in den normalen Betriebsmodus zurückgeführt.

Vorzugsweise beinhaltet der Schritt des Umschaltens des Betriebsführungssystems auf den Enteisungsmode ein selektives Umschalten eines einzelnen Blattanstellwinkelantriebs auf einen Enteisungsmode, um gewisse Sicherheitsabfragen, beispielsweise bezüglich der zulässigen Rotorblattanstellwinkelbeschleunigungen, zu deaktivieren. Vorzugsweise geschieht dieses "fail-safe" über den Schleifring zur Nabe, und zwar jeweils nur für eine Blattachse.

Eine alternative Ausführungsform zur Enteisung geschieht im Stillstand, beispielsweise wenn eine eisbedingte Unwucht des Rotors vorliegt. Zunächst wird die Vereisung durch geeignete Maßnahmen erkannt, beispielsweise durch eine erhebliche Rotorunwucht beim Anlaufen. Die Rotorblätter werden dann in Fahnenstellung verstellt, um den Rotor abzubremsen. Es wird dann mittels einer Rotorbremse der Rotor in einer vorgebbaren, sich aus der Unwucht ergebenden Position festgebremst.

Das Betriebsführungssystem wird dann auf den Enteisungsmode umgeschaltet, um Statuscodes und Überwachungen des Normalbetriebs zu deaktivieren. Es wird dann erfindungsgemäß eine Rotorblattbiegeschwingung bzw. Schwenkschwingung des am niedrigsten stehenden Blattes wiederholt vorgenommen. Optional kann dann eine Erkennung der erfolgreichen Enteisung dieses Blattes vorgenommen werden. Anschließend wird die Rotorbremse gelöst. Es kann sich dann ein passives oder ggf. durch Blattverstellung unterstütztes Einpendeln des Rotors und eine neu sich aus der Unwucht ergebende Position eines anderen Rotorblatts einstellen. Die vorherigen Schritte ab dem Festbremsen des Rotors mit einer Rotorbremse bis zum Lösen der Rotorbremse und dazwischen das wiederholte Anregen, also das Ausführen des erfindungsgemäßen Enteisungsverfahrens, kann dann für die anderen Blätter wiederholt werden, und zwar solange, bis die Unwucht beseitigt ist oder keine weitere Verbesserung erkennbar ist. Danach wird die Windenergieanlage in den normalen Betriebsmodus überführt.

Eine Unwuchterkennung erfolgt beispielsweise durch Auswertung des Drehzahlsignals beim Anlaufen der Windenergieanlage, beispielsweise im Trudelbetrieb, oder mittels Beschleunigungssensoren im Turmkopf. Die auftretende Schwingungsamplitude, insbesondere Schwenkschwingungsamplitude, ist bei den gegebenen Blatteigenschaften oder bei gleichbleibenden Blatteigenschaften insbesondere durch zwei Parameter einstellbar. Diese Parameter sind die Härte der Anregung, also die Pitch-Rate und die Beschleunigungen, sowie der Abstand zwischen der Anregungsfrequenz und der Blatteigenfrequenz und der Blatteigenfrequenz bzw. Schwenkschwingungseigenfrequenz.

Da bei einem vereisten Rotorblatt die Eigenfrequenz durch die Zusatzmasse abgesenkt wird, muss auch die Anregung bei Vereisung abgesenkt werden. Hierzu kann die aktuelle Blattschwenkfrequenz durch einen Sensor, beispielsweise einen Beschleunigungs-, Dehnungs- oder Kraftsensor bestimmt und zur Anregung eingestellt werden. Alternativ kann ausgehend von der, insbesondere unvereisten Nenn-Eigenfrequenz, insbesondere Schwenkeigenfrequenz des Blattes schrittweise die Anregungsfrequenz abgesenkt werden.

Die auftretenden Schwingungsamplituden werden durch, vorzugsweise schon vorhandene, Sensoren überwacht, wie beispielsweise elektrische Kenngrößen im Blattanstellwinkelsystem, beispielsweise dem Anstellwinkelstrom bzw. den elektrischen Strom, der zum Betrieb der Verstellvorrichtung des Rotorblattanstellwinkels verwendet wird. Es wird dann mit der Anregungsfrequenz mit vorzugsweise maximaler Amplitude mehrfach die Schwenkschwingung angeregt. Reduzieren sich die Schwingungsamplituden, wird die Anregungsfrequenz wieder etwas erhöht, da nun mit großer Wahrscheinlichkeit Eis abgefallen ist.

Nach erfolgreicher Enteisung muss die Anregung mit Nennfrequenz zu den größten Schwingungsamplituden führen, was so viel bedeutet, wie dass das Rotorblatt erfolgreich enteist wurde. Bei der Anregung durch Verstellung des Blattanstellwinkels wird ein Offset in positiver Richtung vorgegeben, um zu vermeiden, dass negative Einstellungen des Blattwinkels zum Strömungsabriss und damit zu einem Stall-Effekt führen.

Soweit im Rahmen dieser Anmeldung der Begriff "Eigenfrequenz" gewählt wurde, beinhaltet dieser Begriff auch den Begriff "Resonanzfrequenz" und andersherum.

### Bezugszeichenliste

- 10: Windenergieanlage
- 11: Triebstrang
- 12: Rotor
- 13: Rotornabe
- 14: Rotorblatt
- 15: Längsachse
- 16: Verstellrichtung
- 18: Umlauf (obere Hälfte)
- 19: Umlauf (untere Hälfte)
- 20, 20': zeitlicher Verlauf (Rotorblattposition)
- 22, 22': zeitlicher Verlauf (Anstellwinkel)
- 24,: 24' zeitlicher Verlauf (Verstellrate)
- 26, 26': zeitlicher Verlauf (Biegemoment)
- 28, 28': zeitlicher Verlauf (Leistungsaufnahme)
- 30: Betriebssteuervorrichtung
- 32: Verstellvorrichtung
- 34: Sensorsystem
- 36: Elektrischer Strom
- 37: Dehnungswert
- 38, 38': Beschleunigungswert
- 39, 39': Belastungswert

## Patentansprüche

1. Verfahren zum Betreiben einer Windenergieanlage (10) mit einem Rotor (12) und wenigstens einem in seinem Anstellwinkel verstellbaren Rotorblatt (14), **dadurch gekennzeichnet, dass** das Rotorblatt (14) durch wenigstens fünf wiederholte Verstellvorgänge des Anstellwinkels um seine Längsachse (15) beschleunigt wird, wobei eine Rotorblattbiegeschwingung mit einer Schwingungsamplitude und einer Schwingungsfrequenz angeregt wird, wobei die Verstellvorgänge derart zeitlich aufeinander erfolgen, dass ein Zeitraum zwischen zwei aufeinanderfolgenden Verstellvorgängen in gleicher Richtung einem Vielfachen der inversen Schwingungseigenfrequenz des Rotorblattes entspricht oder um weniger als 10 % länger oder kürzer ist.

2. Verfahren nach Anspruch 1, **dadurch gekennzeichnet, dass** wenigstens acht wiederholte Verstellvorgänge erfolgen.

3. Verfahren nach Anspruch 1 oder 2, **dadurch gekennzeichnet, dass** die Verstellvorgänge mit einer Verstellrate von weniger als 8°/s, insbesondere weniger als 4°/s, ausgeführt werden.

4. Verfahren nach einem der Ansprüche 1 bis 3, **dadurch gekennzeichnet, dass** die Rotorblattbiegeschwingung eine Schwenkschwingung, insbesondere eine Schwenkschwingung mit einer Frequenz, die der 1. Eigenschwenkschwingungsfrequenz entspricht, ist.

5. Verfahren nach einem der Ansprüche 1 bis 4, **dadurch gekennzeichnet, dass** die Schwingungsfrequenz weniger als 1,8 Hz beträgt.

6. Verfahren nach einem der Ansprüche 1 bis 5, **dadurch gekennzeichnet, dass** die Verstellvorgänge unter Einbeziehung eines Sensorsystems (34) ausgeführt, gesteuert und/oder geregelt, insbesondere zeitlich synchronisiert, werden.

7. Verfahren nach Anspruch 6, **dadurch gekennzeichnet, dass** das Sensorsystem den elektrischen Strom (36), der zum Betrieb der Verstellvorrichtung (32) des Rotorblattanstellwinkels verwendet wird, erfasst, misst und/oder überwacht.

8. Verfahren nach Anspruch 6 oder 7, **dadurch gekennzeichnet, dass** das Sensorsystem (34) wenigstens einen Belastungs-, Dehnungs- und/oder Beschleunigungswert (37, 38, 38', 39, 39') erfasst, misst und/oder überwacht.

9. Verfahren nach einem der Ansprüche 1 bis 8, **dadurch gekennzeichnet, dass** eine Rotordrehung mit einer Rotordrehfrequenz unterhalb eines Fünftels, insbesondere unterhalb eines Zehntels, insbesondere unterhalb eines Fünfzehntels, der Schwingungsfrequenz vorliegt, wobei das Rotorblatt (14) einen Umlauf mit einem oberen (18) und einem unteren Halbkreis (19) beschreibt sowie pro Umlauf eine Aufwärtsbewegung und eine Abwärtsbewegung ausführt.

10. Verfahren nach Anspruch 9, **dadurch gekennzeichnet, dass** die Rotordrehfrequenz im unteren Frequenzbereich für einen netzgekoppelten Betrieb der Windenergieanlage (10) liegt.

11. Verfahren nach Anspruch 9 oder 10, **dadurch gekennzeichnet, dass** die Schwingungsamplitude wenigstens in einem Abschnitt des Umlaufs des Rotorblattes (14) durch einen oder mehrere schwingungsdämpfende Verstellvorgänge verringert wird.

12. Verfahren nach einem der Ansprüche 9 bis 11, **dadurch gekennzeichnet, dass** die Verstellvorgänge mit der Rotordrehung synchronisiert sind, wobei insbesondere schwingungsanregende Verstellvorgänge lediglich während der Abwärtsbewegung oder im unteren Halbkreis (19) des Umlaufs des Rotorblattes (14) und/oder schwingungsdämpfende Verstellvorgänge lediglich während der Aufwärtsbewegung oder im oberen Halbkreis (18) des Umlaufs des Rotorblatts (14) ausgeführt werden.

13. Verfahren nach einem der Ansprüche 1 bis 12, **dadurch gekennzeichnet, dass** ein zusätzliches Enteisungsverfahren, insbesondere ein thermisches Enteisungsverfahren, angewendet wird.

14. Windenergieanlage (10) mit einem Rotor (12) und wenigstens einem verstellbaren Rotorblatt (14) und einer Betriebssteuervorrichtung (30), wobei die Betriebssteuervorrichtung (30) für das Anwenden wenigstens eines Verfahrens nach einem oder mehreren der Ansprüche 1 bis 13 zur Enteisung des wenigstens einen verstellbaren Rotorblatts (14) ausgebildet ist.

15. Verwendung eines Verfahrens nach einem der Ansprüche 1 bis 13 zum Betreiben einer Windenergieanlage (10) nach Anspruch 14.

## Claims

1. Method for operating a wind energy installation (10) with a rotor (12) and at least one rotor blade (14) which is adjustable in its angle of attack, **characterised in that** the rotor blade (14) is accelerated by at least five repeated adjustment procedures of the angle of attack around its longitudinal axis (15), wherein a rotor blade bending oscillation with an oscillation amplitude and an oscillation frequency is excited, wherein the adjustment procedures follow each other temporally, such that a period between two consecutive adjustment procedures in the same direction corresponds to a multiple of the rotor blade's own inverse oscillation frequency or is longer or shorter by less than 10%.

2. Method according to claim 1, **characterised in that** at least eight repeated adjustment procedures take place.

3. Method according to claim 1 or 2, **characterised in that** the adjustment procedures are carried out at an adjustment rate of less than 8°/s, in particular less than 4°/s.

4. Method according to one of claims 1 to 3, **characterised in that** the rotor blade bending oscillation is a swinging oscillation, in particular a swinging oscillation with a frequency which corresponds to its 1st own swing oscillation frequency.

5. Method according to one of claims 1 to 4, **characterised in that** the oscillation frequency is less than 1.8 Hz.

6. Method according to one of claims 1 to 5, **characterised in that** the adjustment procedures are carried out, controlled and/or regulated, in particular temporally synchronised, with the incorporation of a sensory system (34).

7. Method according to claim 6, **characterised in that** the sensory system records, measures and/or monitors the electrical current (36) that is used to operate the adjustment device (32) for the rotor blade angle of attack.

8. Method according to claim 6 or 7, **characterised in that** the sensory system (34) records, measures and/or monitors at least one load value, strain value and/or acceleration value (37, 38, 38', 39, 39').

9. Method according to one of claims 1 to 8, **characterised in that** there is one rotation of the rotor having a frequency of rotation of the rotor below a fifth, in particular below a tenth, in particular below a fifteenth, of the oscillation frequency, wherein the rotor blade (14) traces a circuit with an upper (18) and a lower semi-circle (19), and performs one upward movement and one downward movement per circuit.

10. Method according to claim 9, **characterised in that** the rotor's frequency of rotation of the rotor is in the lower frequency range for a grid-connected operation of the wind energy installation (10).

11. Method according to claim 9 or 10, **characterised in that** the oscillation amplitude is reduced, at least in one section of the circuit of the rotor blade (14), by means of one or a plurality of oscillation-damping adjustment procedures.

12. Method according to one of claims 9 to 11, **characterised in that** the adjustment procedures are synchronised with the rotation of the rotor, wherein, in particular, oscillation-exciting adjustment procedures are only carried out during the downward movement or in the lower semi-circle (19) of the circuit of the rotor blade (14), and/or oscillation-damping adjustment procedures are only carried out during the upward movement or in the upper semi-circle (18) of the circuit of the rotor blade (14).

13. Method according to one of claims 1 to 12, **characterised in that** an additional de-icing procedure, in particular a thermal de-icing procedure, is used.

14. Wind energy installation (10) with a rotor (12) and at least one adjustable rotor blade (14) and an operation control device (30), wherein the operation control device (30) is designed for using at least one method according to one or several of claims 1 to 13 for de-icing the at least one adjustable rotor blade (14).

15. Use of a method according to one of claims 1 to 13 for operating a wind energy installation (10) according to claim 14.

## Revendications

1. Procédé pour faire fonctionner une éolienne (10) ayant un rotor (12) et au moins une pale de rotor (14) dont l'angle d'attaque peut être réglé, **caractérisé en ce que** la pale de rotor (14) est accélérée par au moins cinq opérations de réglage répétées de l'angle d'attaque selon son axe longitudinal (15), une vibration de flexion de pale de rotor étant stimulée par une amplitude de vibration et une fréquence de vibration, de sorte que les opérations de réglage effectuées au cours du temps les unes après les autres de telle façon qu'une période de temps entre deux procédures de réglage successives dans la même direction est un multiple de l'inverse de la fréquence propre de vibration de la pale de rotor, ou est plus ou moins allongé ou raccourci de moins de 10% de celui-ci.

2. Procédé selon la revendication 1, **caractérisé en ce qu'**au moins huit opérations répétées de réglage sont effectuées.

3. Procédé selon la revendication 1 ou la revendication 2, **caractérisé en ce que** les opérations de réglage sont effectuées avec un taux d'ajustement de moins de 8°/s, en particulier de moins de 4°/s.

4. Procédé selon l'une quelconque des revendications 1 à 3, **caractérisé en ce que** la vibration de flexion de la pale de rotor est une vibration de pivotement, en particulier une vibration de pivotement ayant une fréquence correspondant à la première fréquence propre de vibration de pivotement.

5. Procédé selon l'une quelconque des revendications 1 à 4, **caractérisé en ce que** la fréquence de vibration est inférieure à 1,8 Hz.

6. Procédé selon l'une quelconque des revendications 1 à 5, **caractérisé en ce que** les opérations de réglage effectuées, commandées et / ou régulées par l'intervention d'un système de capteurs (34), en particulier synchronisés dans le temps.

7. Procédé selon la revendication 6, **caractérisé en ce que** le système de capteurs détecte, mesure et / ou surveille le courant électrique (36) qui est utilisé pour faire fonctionner le dispositif de réglage (32) de l'angle d'attaque de la pale de rotor.

8. Procédé selon la revendication 6 ou la revendication 7, **caractérisé en ce que** le système de capteurs (34) détecte, mesure et / ou surveille au moins une valeur de charge, d'allongement et / ou d'accélération (37, 38, 38', 39, 39').

9. Procédé selon l'une quelconque des revendications 1 à 8, **caractérisé en ce qu'**il existe une rotation de rotor avec une fréquence de rotation de rotor inférieure à un cinquième, en particulier inférieure à un dixième, en particulier inférieure à un quinzième, de la fréquence de vibration, la pale de rotor (14) ayant une révolution décrivant un demi-cercle supérieur (18) et un demi-cercle inférieur (19), et effectuant un mouvement ascendant et un mouvement descendant par révolution.

10. Procédé de la revendication 9, **caractérisé en ce que** la fréquence de rotation du rotor se situe dans la gamme de fréquence inférieure pour un fonctionnement connecté en réseau de l'éolienne (10).

11. Procédé selon la revendication 9 ou la revendication 10, **caractérisé en ce que** l'amplitude de vibration est réduite au moins dans une portion de la révolution de la pale de rotor (14) par une ou plusieurs opérations de réglage d'amortissement des vibrations.

12. Procédé selon l'une quelconque des revendications 9 à 11, **caractérisé en ce que** les opérations de réglage sont synchronisés avec la rotation du rotor, en particulier les opérations de réglage des stimulations de vibrations sont effectuées uniquement durant le mouvement descendant ou dans le demi-cercle inférieur (19) de la révolution de la pale de rotor (14) et / ou des opérations de réglage d'amortissement de vibrations sont effectuées uniquement durant le mouvement ascendant ou dans le demi-cercle supérieur (18) de la révolution de la pale de rotor (14).

13. Procédé selon l'une quelconque des revendications 1 à 12, **caractérisé en ce qu'**un procédé de dégivrage supplémentaire est appliqué, en particulier un procédé de dégivrage thermique.

14. Eolienne (10) comportant un rotor (12) et au moins une pale de rotor (14) réglable et un dispositif (30) de commande du fonctionnement, ledit dispositif de commande de fonctionnement (30) étant conçu pour appliquer au moins un procédé selon une ou plusieurs des revendications 1 à 13 pour le dégivrage de ladite au moins une pale de rotor réglable (14).

15. Utilisation d'un procédé selon l'une quelconque des revendications 1 à 13 pour faire fonctionner une éolienne (10) selon la revendication 14.
